# EUROPEAN PATENT APPLICATION

(11) **EP 4 647 976 A1**
(43) Date of publication of application: **12.11.2025**
(21) Application number: 25174790.3
(22) Date of filing: 07.05.2025
(51) Int. Cl.: G06N 10/40, G06F 1/12

(54) **SIGNAL GENERATOR FOR PROVIDING TIMING SIGNALS FOR CONTROL OF QUANTUM COMPUTER SYSTEMS**

(30) Priority: 09.05.2024 KR 20240061144
(71) Applicant: SDT Inc., Seoul 06211 (KR)
(72) Inventor: PARK, Byung Kwon, Suwon-si (KR); KANG, Young Jun, Gunpo-si (KR); LEE, Seung Pil, Yongin-si (KR); LIM, Jonggeun, Seongnam-si (KR)
(74) Representative: Dehns

(57) **Abstract**

A signal generator comprising a timer configured to execute a predetermined session N times upon detecting a pulse of a first trigger signal and to output a signal generation start signal having one or more pulses in each said session, and a channel signal generation unit configured to generate a timing signal having one or more pulses upon detecting a pulse of the signal generation start signal.

## Description

### Technical Field

<0001> The present invention relates to a signal generator for generating timing signals necessary for controlling quantum computers.

### Background Art

<0002> Quantum computer systems must be equipped with a signal generator that produces synchronization signals and TTL pulses necessary for precise qubit control. This signal generator generates timing signals used throughout the entire quantum computer system and must be able to distribute each generated timing signal to multiple individual devices belonging to the overall quantum computer system. To achieve this, technology is needed to independently generate and provide timing signals suitable for each respective individual device.

### Summary of the Invention

### Problem to be Solved

<0003> The present invention aims to provide a new signal generator that provides timing signals for the control of quantum computer systems.

### Solution to Problem

<0004> According to an embodiment of the present invention, a signal generator (1) can be provided that generates a plurality of timing signals required by a quantum computing system.

<0005> The timing signals may be synchronization signals and/or TTL pulses required by the quantum computing system for precise qubit control.

<0006> The signal generator generates timing signals used in the entire quantum computer system and is configured to distribute each generated timing signal (20) to each of a plurality of individual devices belonging to the entire quantum computer system.

<0007> The signal generator may include a plurality of signal generation channels, each used for generating a plurality of timing signals. For example, a first signal generation channel generates a first timing signal for driving a laser, a second signal generation channel generates an equipment driving signal (second timing signal) for qubit operations, and a third signal generation channel generates a synchronization signal (third timing signal) that includes the capability to perform functions multiple times with precise timing as a detector driving signal for light source detection.

<0008> The signal generator can generate precisely synchronized TTL pulses by generating the rising and falling edges of TTL pulses according to the user's desired timing. For example, it can generate up to 1024 TTL pulses.

<0009> In one implementation, the signal generator may include a total of 12 channels, from channel 1 (CH01) to channel 12 (CH12). Each channel can adjust the occurrence timing of the rising/falling edges of TTL pulses with a resolution of 5 ns.

<0010> The signal generator may include channel signal generation units (200) corresponding to each of the plurality of channels. For example, if there are a total of 12 channels, the signal generator may include a total of 12 channel signal generation units.

<0011> A predetermined delay chain part may be coupled to the output stage of each channel signal generation unit. The setting of each delay chain part can be performed independently. By using the delay chain part, a relative delay with 10 ps resolution can be created between two selected channels among the plurality of channels.

<0012> Each of the plurality of channel signal generation units receives a signal generation start signal (110) provided by a predetermined timer (100) included in the signal generator. For example, a first signal generation start signal provided by the timer may be supplied to the first channel signal generation unit, and a second signal generation start signal provided by the timer may be supplied to the second channel signal generation unit. For instance, using the event where the first signal generation start signal changes from a first level to a second level as a trigger signal, the first channel signal generation unit can generate and output a first timing signal according to predetermined rules.

<0013> The signal generator may receive an external trigger-in signal (N-channel trigger input signal) (10) provided from outside the signal generator and be configured to generate a plurality of timing signals synchronized with the external trigger-in signal (N-channel trigger input signal).

<0014> The signal generator can generate and output a trigger-out signal (N-channel trigger output signal) (30) based on the external trigger-in signal (N-channel trigger input signal). The trigger-out signal (N-channel trigger output signal) can be used to generate a combined signal by performing AND logic operation or OR logic operation between selected timing signals among the plurality of timing signals.

<0015> According to one aspect of the present invention, a signal generator may be provided, comprising: a timer (100) configured to execute a predetermined session N times upon detecting a pulse of a first trigger signal (410) and to output a signal generation start signal (110) having one or more pulses in each said session; and a channel signal generation unit (200) configured to generate a timing signal (20) having one or more pulses upon detecting a pulse of the signal generation start signal.

<0016> In this case, the signal generator may further include a control unit (300) providing a predetermined execution period and the value of N to the timer, wherein the timer is configured to execute the N-repeated sessions according to the execution period upon detecting the pulse of the first trigger signal.

<0017> In this case, the channel signal generation unit includes a memory (210) and a generation unit (220), wherein a sequence of natural numbers may be recorded at a sequence of addresses in the memory. And the generation unit is configured to generate and output an output signal (221) having either a first level or a second level, to read a first natural number and a second natural number from the sequence of natural numbers, to control the level of the output signal to have the first level for a first time duration corresponding to the value of the first natural number, and, after the first time duration elapses, to control the level of the output signal to have the second level for a second time duration corresponding to the value of the second natural number.

<0018> In this case, the generation unit is configured to read the second natural number after reading the first natural number, to read the first natural number before the start time point of the first time duration corresponding to the value of the first natural number, and to read the second natural number before the start time point of the second time duration corresponding to the value of the second natural number.

<0019> In this case, if the first natural number is read from a first address of the memory, the generation unit may be configured to read the second natural number from a second address which is the address immediately following the first address.

<0020> In this case, the channel signal generation unit includes a memory (210) and a generation unit (220), wherein a sequence of natural numbers may be recorded at a sequence of addresses in the memory. And the generation unit is configured to generate and output an output signal (221) having alternating first and second levels, wherein the output signal is composed of a plurality of sequential time intervals separated based on boundary time points between the first level and the second level, and the length of each of the sequential time intervals corresponds respectively to the values of the sequence of natural numbers.

<0021> In this case, the generation unit is configured to sequentially read the sequence of natural numbers, and the length of each of the sequential time intervals corresponds sequentially to the values of the sequentially read sequence of natural numbers.

<0022> In this case, the signal generator further includes a control unit (300), wherein the control unit is configured to prepare the sequence of natural numbers so that the channel signal generation unit can record the sequence of natural numbers in the memory, and to provide them to the channel signal generation unit.

<0023> In this case, the channel signal generation unit may further include a session selection unit (230) configured to receive the output signal and mask a portion of the output signal. And the session selection unit outputs the output signal as the timing signal provided by the channel signal generation unit during a pre-selected session among the N-repeated sessions, and is configured to output a signal fixed at a specific level as the timing signal during the remaining other sessions excluding the pre-selected session among the N-repeated sessions.

<0024> In this case, the channel signal generation unit may further include a session selection unit (230) configured to receive the output signal and mask a portion of the output signal. And the signal generator may further include a control unit (300) configured to provide a current identifier, which is an identifier of the current session among the N-repeated sessions, and one or more selection identifiers, which are identifiers indicating the pre-selected sessions, to the session selection unit. And the session selection unit may output the output signal as the timing signal provided by the channel signal generation unit if any one of the one or more selection identifiers is identical to the current identifier. And the session selection unit may be configured to output a signal fixed at a specific level as the timing signal if the current identifier is not included in the one or more selection identifiers.

<0025> In this case, the channel signal generation unit may further include a session selection unit (230) configured to receive the output signal and mask a portion of the output signal, and a delay unit (700). And the session selection unit outputs the output signal during a pre-selected session among the N-repeated sessions, and is configured to output a signal fixed at a specific level during the remaining other sessions excluding the pre-selected session among the N-repeated sessions. And the delay unit may be configured to output a delayed signal, which is the signal output by the session selection unit delayed by a predetermined amount of time, as the timing signal provided by the channel signal generation unit.

<0026> According to another aspect of the present invention, a signal generator may be provided, comprising: a timer (100) configured to execute a predetermined session N times upon detecting a pulse of a first trigger signal (410), and to output a first signal generation start signal having one or more pulses in each said session, and a second signal generation start signal having one or more pulses in each said session; a first channel signal generation unit (201) configured to generate a first timing signal having one or more pulses upon detecting a pulse of the first signal generation start signal; and a second channel signal generation unit (202) configured to generate a second timing signal having one or more pulses upon detecting a pulse of the second signal generation start signal. In this case, the time-axis profile of the first timing signal is different from the time-axis profile of the second timing signal.

<0027> According to yet another aspect of the present invention, a quantum computing device may be provided, comprising: the signal generator; and any one of a laser device configured to receive the timing signal generated by the signal generator, a qubit operation device configured to receive the timing signal, and a photodetection device configured to receive the timing signal.

### Advantageous Effects of Invention

<0028> According to the present invention, a new signal generator can be provided that provides timing signals for the control of quantum computer systems.

### Brief Description of Drawings

FIG. 1 illustrates the configuration of a signal generator provided according to an embodiment of the present invention.
FIG. 2 illustrates a state machine of a timer provided according to an embodiment of the present invention.
FIG. 3 illustrates an example of data provided by a control unit and the manner in which the data is recorded in memory according to an embodiment of the present invention.
FIG. 4a illustrates the process of generating an output signal in a channel signal generation unit provided according to an embodiment of the present invention.
FIG. 4b illustrates an example of the output signal generated by the channel signal generation unit presented in FIG. 4a.
FIG. 5 illustrates the internal configuration of a signal generator provided according to an embodiment of the present invention.
FIG. 6 illustrates a method for generating timing signals provided according to another embodiment of the present invention.
FIG. 7 is a flowchart illustrating a method for generating timing signals provided according to an embodiment of the present invention.
FIG. 8 illustrates signal patterns and states in one operation mode of the signal generator provided according to an embodiment of the present invention.

### Detailed Description of Embodiments

<0030> Hereinafter, embodiments of the present invention will be described with reference to the accompanying drawings. However, the present invention is not limited to the embodiments described herein and can be implemented in various other forms. The terminology used in this specification is for understanding the embodiments and is not intended to limit the scope of the invention. In addition, singular forms used herein include plural forms unless the context clearly dictates otherwise.

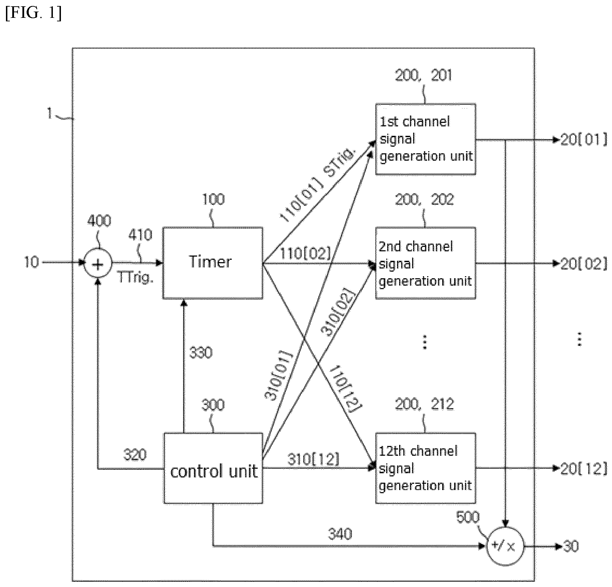

<0031> FIG. 1 illustrates the configuration of a signal generator provided according to an embodiment of the present invention.

<0032> The signal generator (1) may include a timer (100), a channel signal generation unit (200), a control unit (300), an input trigger combination unit (400), and an output trigger generation unit (500).

<0033> The signal generator (1) may include multiple channel signal generation units (200). For example, the signal generator (1) may include channel signal generation units from channel 1 (200[01]) to channel 12 (200[12]).

<0034> The timer (100) receives a timer trigger signal (410) generated based on an external trigger-in signal (10) and an internal trigger (320), and generates a signal generation start signal (STrig.) (110) based on the received external trigger-in signal (10) or internal trigger (320) and provides it to the channel signal generation unit (200). For example, the timer (100) can generate signal generation start signals from channel 1 (110[01]) to channel 12 (110[12]) and provide them respectively to the channel signal generation units from channel 1 (200[01]) to channel 12 (200[12]).

<0035> The control unit (300) can provide a predetermined execution period and session repetition count to the timer (100). The execution period is information indicating the time interval between two consecutively executed sessions in the timer (100), and the session repetition count may be a value indicating the total number of repetitions of a session executed when the timer (100) detects one timer trigger signal (410).

<0036> The control unit (300) can provide waveform data (310) required by each channel signal generation unit (200) to the channel signal generation unit (200). For example, the control unit (300) can generate data from channel 1 (310[01]) to channel 12 (310[12]) and provide them respectively to the channel signal generation units from channel 1 (200[01]) to channel 12 (200[12]).

<0037> The control unit (300) can provide an internal trigger (320).

<0038> The input trigger combination unit (400) can combine the external trigger-in signal (10) input from outside the signal generator (1) and the internal trigger (320) to generate a timer trigger signal (TTrig.) (410) and provide it to the timer (100). Consequently, the timer (100) can receive the external trigger-in signal (10) or the internal trigger (320). Here, the combination may mean performing an OR operation on the external trigger-in signal (10) and the internal trigger (320).

<0039> Each channel signal generation unit (200) can generate a timing signal (20) based on the signal generation start signal (110) and waveform data (310) input to it. For example, channel signal generation units from channel 1 (200[01]) to channel 12 (200[12]) can generate timing signals from channel 1 (20[01]) to channel 12 (20[12]), respectively.

<0040> Each of the timing signals (20) may be used individually, or they may be used in combination with each other.

<0041> The output trigger generation unit (500) can generate a trigger-out signal (30) by combining two or more selected timing signals (20) from the plurality of timing signals (20). In this case, the combination may include operations of adding or multiplying the selected two or more timing signals (20).

<0042> To achieve this, the control unit (300) can generate a timing signal selection and operation rule signal (340) based on the external trigger-in signal (10) and provide it to the output trigger generation unit (500). The output trigger generation unit (500) selects two or more timing signals (20) from the plurality of timing signals (20) based on the timing signal selection and operation rule signal (340), and performs an operation using the operation rule received from the control unit (300) on the selected timing signals (20) to generate the trigger-out signal (30).

<0043> In a preferred embodiment, the external trigger-in signal (10), timing signal (20), trigger-out signal (30), internal trigger (320), execution period and session repetition count (330), signal generation start signal (110), waveform data (310), and timing signal selection and operation rule signal (340) can each be TTL signals having a voltage value of either a first level or a second level.

<0044> The first level and the second level can be HIGH level signals and LOW level signals, respectively. Or vice versa.

<0045> When the signal output by the input trigger combination unit (400) is a HIGH level signal, the timer (100) can generate and output a plurality of signal generation start signals (110) to be provided to the plurality of channel signal generation units (200).

<0046> Here, generating and outputting the signal generation start signal (110) may mean changing the level of the signal generation start signal (110) according to a specific rule. For example, the timer (100) basically maintains the value of the signal generation start signal (110) at a LOW level value, and can change it to a HIGH level value at the time point when the channel signal generation unit (200) is desired to generate the timing signal (20). In this case, the channel signal generation unit (200) can start the process of generating the timing signal (20) from the time point when the value of the signal generation start signal (110) changes to the HIGH level.

<0047> Before the signal generator (1) outputs the timing signal (20), as a kind of preliminary work, the control unit (300) can transmit the waveform data (310), which is information necessary for the channel signal generation unit (200) to generate the timing signal (20), to the channel signal generation unit (200). The channel signal generation unit (200) may include RAM for storing the transmitted waveform data (310).

<0048> The waveform data (310) may include information regarding the time points of the rising edges and falling edges of the timing signal (20) that the channel signal generation unit (200) should generate. The time points of the rising edges and falling edges may be, for example, time points determined relatively based on the time point when the timer (100) generates and outputs the signal generation start signal (110).

<0049> The timing signal selection and operation rule signal (340) may be a signal generated and output by the control unit (300). In this case, the specific value of the timing signal selection and operation rule signal (340) may be a value set by a user using the signal generator (1) and input to the control unit (300).

<0050> The signal generator (1) can be applied to various types of quantum computing systems, and the timing signal selection and operation rule signal (340) may be set differently depending on the specific configuration and/or requirements of the quantum computing system to which the signal generator (1) is applied.

<0051> The operation method of the timer (100) may be achieved by an algorithm implemented according to a state machine provided according to an embodiment of the present invention.

<0052> In an embodiment of the present invention, one or more of the timer (100), channel signal generation unit (200), control unit (300), input trigger combination unit (400), and output trigger generation unit (500) may be implemented by an FPGA.

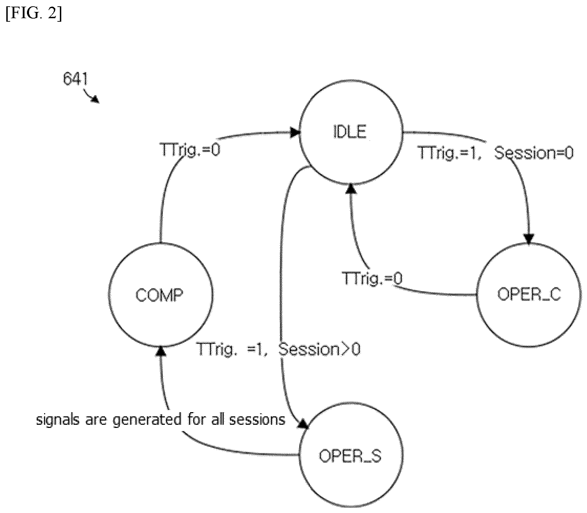

<0053> FIG. 2 illustrates a state machine of a timer provided according to an embodiment of the present invention.

<0054> The timer (100) may be configured to operate based on a first state machine (641). For this purpose, the timer (100) may include a circuit that executes an algorithm according to the first state machine (641).

<0055> The first state machine (641) includes four states, and can use information regarding the timer trigger signal (410) input to the timer (100) and the session repetition count for at least one state transition. The timer trigger signal (410) is provided by the input trigger combination unit (400), and the information regarding the session repetition count may be included in the execution period and session repetition count (330) provided by the control unit (300). The session repetition count can be an integer.

<0056> In an embodiment, if the session repetition count is 0, this may mean repeating the corresponding session indefinitely until certain other conditions are met.

<0057> The four states possessed by the first state machine (641) are respectively the idle state [IDLE], continuous operation state [OPER_C], session operation state [OPER_S], and completion state [COMP].

<0058> The timer (100) can be in the idle state [IDLE] under the condition that the timer trigger signal (410) is 0. In this case, if the timer (100) detects that the timer trigger signal (410) has changed to 1, it can transition to the continuous operation state [OPER_C] or the session operation state [OPER_S] depending on the specific value of the session repetition count received from the control unit (300).

<0059> If the timer trigger signal (410) is 1 and the value of the session repetition count is greater than 0, it can transition from the idle state [IDLE] to the session operation state [OPER_S]. In this case, if the value of the session repetition count is N, the timer (100) in the session operation state [OPER_S] can execute a predetermined session N times.

<0060> On the other hand, if the timer trigger signal (410) is 1 and the value of the session repetition count is 0, it can transition from the idle state [IDLE] to the continuous operation state [OPER_C]. Here, the value of the session repetition count being 0 indicates that the number of repetitions for a certain session is not defined, and if defined with the same meaning, it could be replaced by another value other than 0, for example, -1.

<0061> While the timer (100) is in the continuous operation state [OPER_C], if it detects that the timer trigger signal (410) has changed to 0, it transitions from the continuous operation state [OPER_C] to the idle state [IDLE]. In one embodiment, the timer (100) in the continuous operation state [OPER_C] can repeat a predetermined session without limit until the timer trigger signal (410) changes to 0.

<0062> While the timer (100) is in the session operation state [OPER_S], if it executes the session as many times as the session repetition count, it can transition to the completion state [COMP].

<0063> While the timer (100) is in the completion state [COMP], if it detects that the timer trigger signal (410) has a value of 0, it can transition from the completion state [COMP] to the idle state [IDLE].

<0064> In each of the aforementioned sessions, the timer (100) can generate and output the signal generation start signal (110) according to a predetermined rule. The signal generation start signals (110) generated for different channels can be generated independently. Therefore, different signal generation start signals (110) may be signals of different shapes.

<0065> In this case, in the continuous operation state [OPER_C], the timer (100) can execute the session repeatedly according to the execution period delivered through the execution period and session repetition count (330) by the control unit (300).

<0066> In this case, in the session operation state [OPER_S], the timer (100) can execute the session N times repeatedly according to the execution period delivered through the execution period and session repetition count (330) by the control unit (300).

<0067> For each session, the timer (100) can provide a predetermined signal generation start signal (STrig.) (110) to the channel signal generation unit (200).

<0068> In an embodiment of the present invention, the channel signal generation unit (200) can operate according to a second state machine (642) provided according to an embodiment of the present invention. The second state machine (642) requires certain information for its operation. This information may be stored in the channel signal generation unit (200), and for this purpose, the channel signal generation unit (200) may include a memory (210) for storing the information.

<0069> In one embodiment, the memory (210) may be RAM.

<0070> The information stored in the memory (210) may be waveform data (310) provided from the control unit (300).

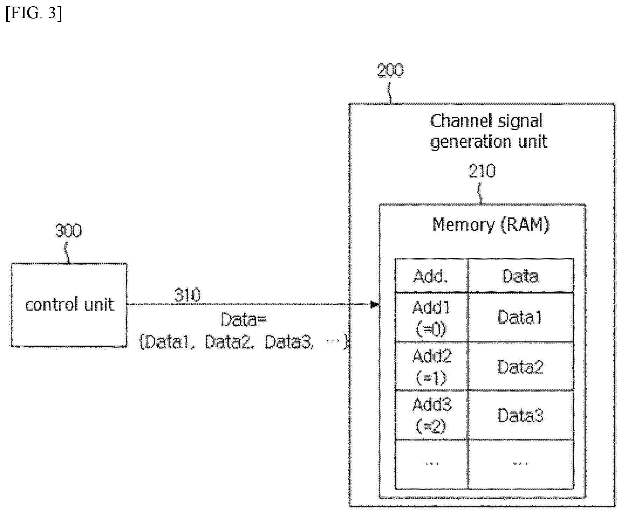

<0071> FIG. 3 illustrates an example of data provided by a control unit and the manner in which the data is recorded in memory according to an embodiment of the present invention.

<0072> The control unit (300) can generate waveform data (310) including information {Data1, Data2, Data3, ...} to be stored in the memory (210) and provide it to the channel signal generation unit (200).

<0073> {Data1, Data2, Data3, ...} may be values set by the user for the quantum computer system where the signal generator (1) is used. Data1, Data2, and Data3 etc. can each be natural numbers.

<0074> When the channel signal generation unit (200) receives the waveform data (310), it can store {Data1, Data2, Data3, ...} in the memory (210). In this case, {Data1, Data2, Data3, ...} can be stored at {Add1, Add2, Add3, ...} of the memory (210), respectively. Here, Add1, Add2, and Add3 etc. can mean addresses of the memory (210) that have sequentially increasing values.

<0075> In one embodiment, {Add1, Add2, Add3, ...} may be preset to {0, 1, 2, ...}.

<0076> In another embodiment, the waveform data (310) may further include information specifying the specific values of {Add1, Add2, Add3, ...} where {Data1, Data2, Data3, ...} are to be stored respectively.

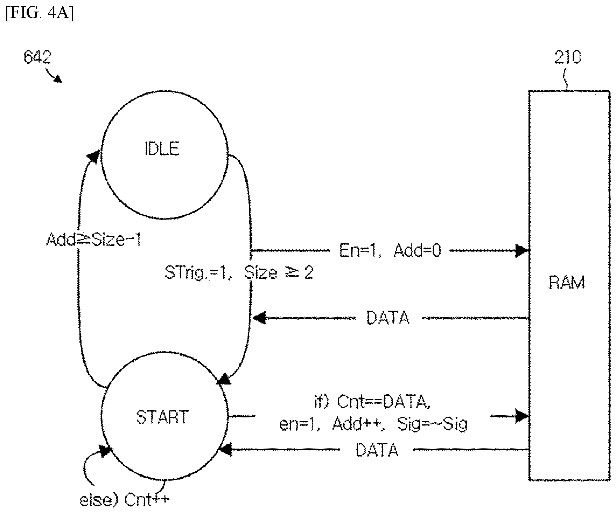

<0077> FIG. 4a illustrates the process of generating an output signal in a channel signal generation unit provided according to an embodiment of the present invention.

<0078> The channel signal generation unit (200) may be configured to operate based on a second state machine (642). For this purpose, the channel signal generation unit (200) may include a circuit that executes an algorithm according to the second state machine (642).

<0079> The second state machine (642) includes two states, and can use the signal generation start signal (110) input to the channel signal generation unit (200) for at least one state transition.

<0080> The two states possessed by the second state machine (642) are respectively the idle state [IDLE] and the start state [START].

<0081> While the channel signal generation unit (200) is in the idle state [IDLE], if the signal generation start signal (110) received from the timer (100) is 1, and the value of a predetermined parameter Size is 2 or more, it can transition to the start state [START].

<0082> Here, the value of Size may be a value provided in advance by the control unit (300) to the channel signal generation unit (200).

<0083> Alternatively, the value of Size may be a value pre-stored in the channel signal generation unit (200).

<0084> In an embodiment of the present invention, the value of Size may mean the total number of data items in the memory (210) that should be read during one session.

<0085> In the process of transitioning from the idle state [IDLE] to the start state [START], the channel signal generation unit (200) provides en=1 and Add=Add1=0 to the memory (210) to read Datal recorded at Add1 of the memory (210). The memory (210) is RAM included in each channel signal generation unit (200). Here, en means enable, and Add means Address. And in this process, the channel signal generation unit (200) can initialize a predetermined Cnt prepared for the second state machine (642) to 0.

<0086> Here, providing Add=Add1=0 means that the second state machine (642) provides the address where the first data to be read from the memory (210) is recorded. Depending on the implementation, Add1 may not be 0.

<0087> The Datal value recorded in the memory (210) may be information included in the waveform data (310) transmitted from the control unit (300) to the channel signal generation unit (200).

<0088> In the start state [START], according to the operation clock of the second state machine (642), if the value of the internal Cnt is smaller than the value of the read Data1, Cnt can be incremented by 1 (Cnt++). For example, if the value of Data1 read during the transition from the idle state [IDLE] to the start state [START] is 10, then when 10 operation clocks of the second state machine (642) have passed, Cnt=10.

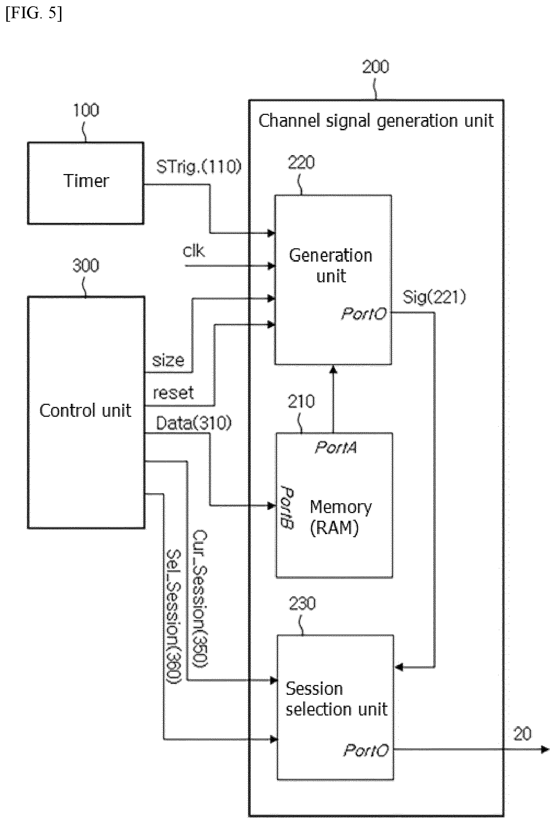

<0089> In the start state [START], if the condition that the value of Data1 read from the memory (210) and the value of Cnt are equal is met, en=1 and Add++=Add2 are provided to the memory (210) to read Data2 recorded at Add++=Add2 of the memory (210). Here, Add++ means the value of Add obtained by adding a unit address size to the existing Add1. And the channel signal generation unit (200) can reset the prepared Cnt for the second state machine (642) back to 0. And the channel signal generation unit (200) can change the value of the output signal (Sig) generated by the second state machine (642) from the first level to the second level, or from the second level to the first level. That is, it can invert the value of the output signal (Sig=~Sig). The output signal may be the signal output from the output port (Port0) of the generation unit (220) described later in FIG. 5.

<0090> In the start state [START], if the Add value of the updated state is greater than or equal to Size-1, it can transition to the idle state [IDLE].

<0091> By repeating the execution of this second state machine (642), the occurrence of rising edges and falling edges of the output signal (Sig) can be controlled based on the Data stored in the memory (210).

<0092> If the operation clock is 200MHz, the output signal (Sig) with a resolution of 5ns can be generated.

<0093> The output signal (Sig) can be used as it is as the timing signal (20) output by the channel signal generation unit (200). Alternatively, a portion of the output signal (Sig) may be masked by the session selection unit (230) described later in FIG. 5, and then provided as the timing signal (20).

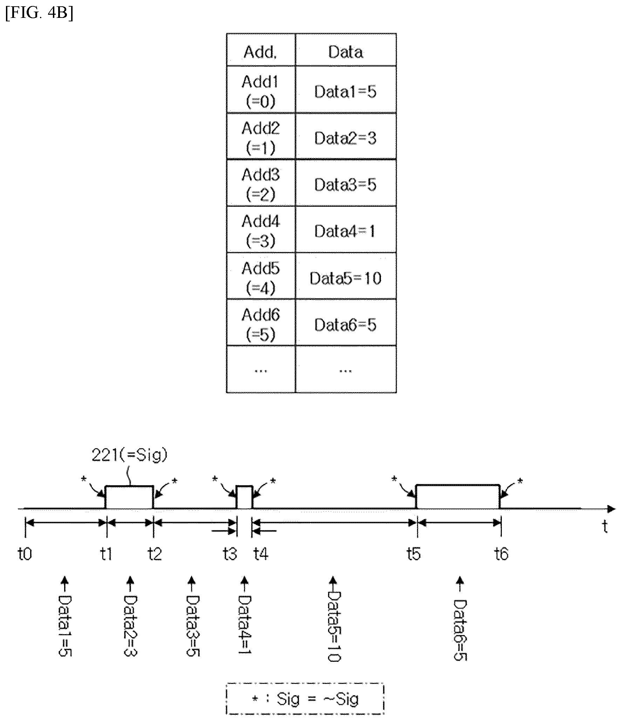

<0094> FIG. 4b illustrates an example of the output signal (Sig) generated by the channel signal generation unit presented in FIG. 4a.

<0095> It is assumed that the data stored at addresses '0'(=Add1), '1'(=Add2), '2'(=Add3), '3'(=Add4), '4'(=Add5), and '5'(=Add6) of the memory (210) are '5'(=Data1), '3'(=Data2), '5'(=Data3), '1'(=Data4), '10'(=Data5), and '5'(=Data6) respectively, as shown in the upper part of FIG. 4b.

<0096> The lower part of FIG. 4b shows the waveform of the output signal (Sig) generated by the second state machine (642) reading the data stored in the memory (210).

<0097> In the example of FIG. 4b, the operation clock of the second state machine (642) is a clock having a period that changes at a speed including a total of 5 pulses from time t0 to time t1, for instance. The second state machine (642) resets the value of Cnt to 0 at multiple time points marked with '*' in FIG. 4b. Each time the value of Cnt is reset to 0, the second state machine (642) increments the value of the address and reads the data stored at the incremented address. And according to the operation clock, it increments the Cnt value, and when the value of Cnt becomes equal to the value of the read data, it inverts the level of the waveform of the output signal (Sig) and resets Cnt back to 0. Therefore, the time length of each pulse of the output signal (Sig), and the time length between each pulse, can be determined according to the value of the data recorded in the memory (210).

<0098> FIG. 5 illustrates the internal configuration of a signal generator (1) provided according to an embodiment of the present invention.

<0099> The control unit (300) may be configured to control the session repetition count executed in the timer (100).

<0100> Also, the control unit (300) can specify the session that each channel signal generation unit (200) should invalidate or select among the sessions executed in the timer (100). That is, the control unit (300) can determine the current session (Cur_Session) (350), which is the session currently being executed by the timer (100), and the selection session (Sel_Session) (360), which is the session the channel signal generation unit (200) should select, and provide them to the channel signal generation unit (200). The selection session (360) may be determined automatically according to the specific settings and configuration of the quantum computer system to which the signal generator (1) is applied, or determined by the user.

<0101> In this specification, the current session (Cur_Session) (350) may mean the ID of the current session that can distinguish the current session from other sessions. And the selection session (Sel_Session) (360) may mean the IDs of one or more selected sessions that can identify the selected sessions. Here, the ID of the current session and the IDs of the sessions may be numbers assigned according to the order of executed sessions when a series of sessions are executed by the first state machine (641) of FIG. 2. For example, assuming that a total of 10 sessions are repeatedly executed by the first state machine (641), the ID of the current session and the ID of a specific session included in the selection session can be any one of the natural numbers from 1 to 10.

<0102> The channel signal generation unit (200) may be configured to output a valid timing signal (20) only in the selected session and output the timing signal (20) fixed at a specific level in the time interval of the remaining sessions.

<0103> For example, assuming the session repetition count is N, the first channel signal generation unit (200, 201) may be set to select only the k1-th session among them, and the second channel signal generation unit (200, 202) may be set to select only the k2-th to k3-th sessions among them.

<0104> The timer (100) generates the signal generation start signal (110) corresponding to the executed session according to the session repetition count set by the control unit (300) and provides it to the channel signal generation unit (200). An example of the specific method is as described with reference to FIG. 1 and FIG. 2.

<0105> The timer (100) can execute one or multiple sessions, and provide one or multiple trigger signals to the channel signal generation unit (200) for each session.

<0106> The channel signal generation unit (200) may include a memory (210), a generation unit (220), and a session selection unit (230).

<0107> The generation unit (220) receives a clock (clk) provided from outside and operates according to the clock (clk).

<0108> The control unit (300), before starting the signals for the entire session, i.e., when the timer (100) is in the idle state [IDLE], can provide the total number (size) of data items that the generation unit (220) needs to read from the memory (210). Set the Data(310) and size of the session, give a trigger signal to transition to the start state [START]. The channel signal generation unit (200) generates and outputs the timing signal (20) that should be output during one session based on the total number (size).

<0109> The generation unit (220) can be reset by a reset signal provided by the control unit (300).

<0110> The second state machine (642) presented in FIG. 4a can be executed in the generation unit (220) of the channel signal generation unit (200).

<0111> When the generation unit (220) receives multiple trigger signals (STrig.) related to multiple sessions according to the session repetition count from the timer (100), the second state machine (642) presented in FIG. 4a is executed multiple times, and accordingly, the output signal (Sig) (221) can be output through the output port (Port0).

<0112> If the channel signal generation unit (200) does not include the session selection unit (230), the output signal (Sig) (221) can be output as it is as the timing signal (20). However, in the example of FIG. 5, the portion corresponding to some sessions among the output signal (Sig) (221) can be masked by the session selection unit (230), and the result of the masking can be output as the timing signal (20).

<0113> As mentioned above, the memory (210) receives data from the control unit (300) and stores it, and then provides some or all of the data to the generation unit (220) at the necessary time point according to the operation of the second state machine (642) presented in FIG. 4a. In this case, the memory (210) may have a first port (PortA) and a second port (PortB) as data input/output interfaces. In this case, the data delivered from the control unit (300) to the memory (210) is recorded in the memory (210) through the second port (PortB), and the data delivered from the memory (210) to the generation unit (220) may be configured to be read from the memory (210) through the first port (PortA).

<0114> The session selection unit (230) can receive the value indicating the current session (Cur_Session) (350) and the value indicating the selection session (Sel_Session) (360) from the control unit (300).

<0115> The value indicating the current session (Cur_Session) (350) may be a value that changes in real time as the ID of the executed session changes. In contrast, the value indicating the selection session (Sel_Session) (360) may be a value that does not change during the time interval from the [IDLE] state until reaching the next [IDLE] state of the first state machine (641) in FIG. 2.

<0116> The control unit (300) knows the total number of sessions to be executed when the timer (100) detects the timer trigger signal (410) once, which is the session repetition count, and knows information about the ID of the session that the channel signal generation unit (200) should select.

<0117> Also, the control unit (300) knows the ID of the session currently being executed in real time. In contrast, the channel signal generation unit (200) itself does not know what the ID of the current session is, so to know this, it needs to acquire the value indicating the current session (Cur_Session) (350) from the control unit (300).

<0118> The session selection unit (230), through the output terminal (Port0), either outputs the output signal (Sig) (221) generated by the generation unit (220) as it is as the timing signal (20), or ignores the value of the output signal (Sig) (221) generated by the generation unit (220) and outputs a signal fixed at a specific level as the timing signal (20).

<0119> If the value of the current session (Cur_Session) (350) received from the control unit (300) is equal to a value included in the information indicated by the selection session (Sel_Session) (360) received from the control unit (300), the session selection unit (230) can output the output signal (Sig) (221) generated by the generation unit (220) as it is as the timing signal (20).

<0120> On the other hand, if the value of the current session (Cur_Session) (350) received from the control unit (300) is not a value included in the information indicated by the selection session (Sel_Session) (360) received from the control unit (300), the session selection unit (230) can ignore the value of the output signal (Sig) (221) generated by the generation unit (220) and output a signal fixed at a specific level as the timing signal (20).

<0121> The control unit (300) can set and provide the selection session (Sel_Session) (360) independently for each of the plurality of channel signal generation units (200). Therefore, the specific value of the selection session (360) provided to different channel signal generation units (200) may be different or the same.

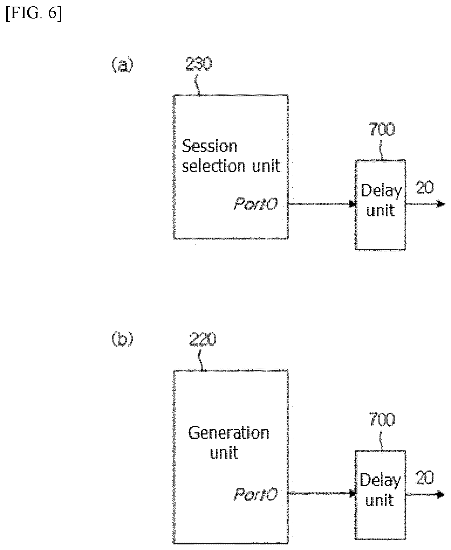

<0122> FIG. 6 illustrates a method for generating the timing signal (20) provided according to another embodiment of the present invention.

<0123> In FIG. 5, the signal output from the output port (Port0) of the session selection unit (230) itself was provided as the timing signal (20) of the channel signal generation unit (200).

<0124> In contrast, as shown in (a) of FIG. 6, the channel signal generation unit (200) may further include a predetermined delay unit (700) connected to the output port (Port0) of the session selection unit (230). In this case, the channel signal generation unit (200) can provide the output signal of the delay unit (700) as the timing signal (20).

<0125> In this case, the delay unit (700) can delay the input signal with a time resolution of, for example, 10 ps and output it.

<0126> In a further modified embodiment, as shown in (b) of FIG. 6, the channel signal generation unit (200) may further include a predetermined delay unit (700) connected to the output port (Port0) of the generation unit (220).

<0127> In this case, the delay unit (700) can delay the input signal with a time resolution of, for example, 10 ps and output it.

<0128> Using one of the configurations presented in FIG. 6, as described above, the channel signal generation unit (200) of each channel included in the signal generator (1) can generate the timing signal (20) having rising/falling edges controlled with 5ns resolution, and in this case, the delay of the timing signal (20) can be controlled in units of 10ps.

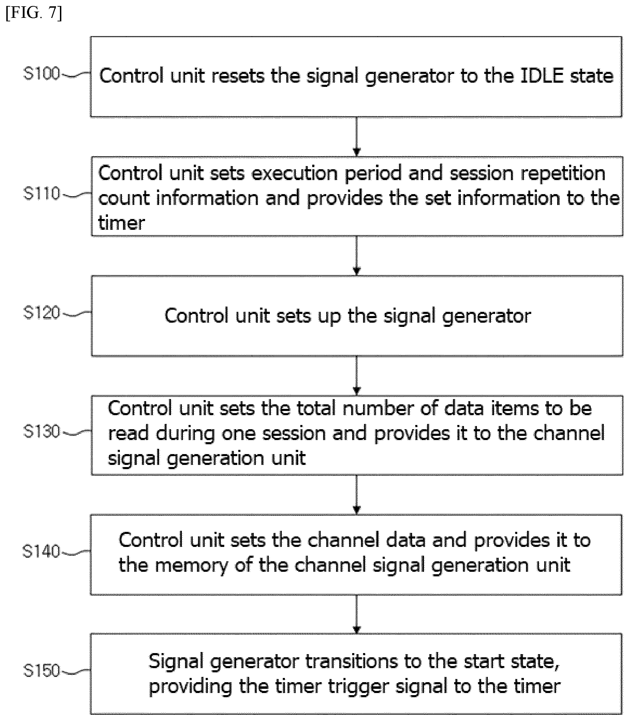

<0129> FIG. 7 is a flowchart illustrating a method for generating timing signals provided according to an embodiment of the present invention.

<0130> In step (S100), the control unit (300) can reset the signal generator (1) to set it to the idle [IDLE] state (State=IDLE).

<0131> In step (S110), the control unit (300) sets information about the execution period and session repetition count, and provides the set information about the execution period and session repetition count to the timer (100).

<0132> In step (S120), the control unit (300) can set up the signal generator (1).

<0133> In step (S130), the control unit (300) sets the total number (size) of data items to be read during one session and provides it to the channel signal generation unit (200).

<0134> In step (S140), the control unit (300) sets the channel data (Data) and provides it to the memory (210) of the channel signal generation unit (200).

<0135> In step (S150), the signal generator (1) can transition to the start state [START] and provide the timer trigger signal (410) to the timer (100) (State[1:0]=START).

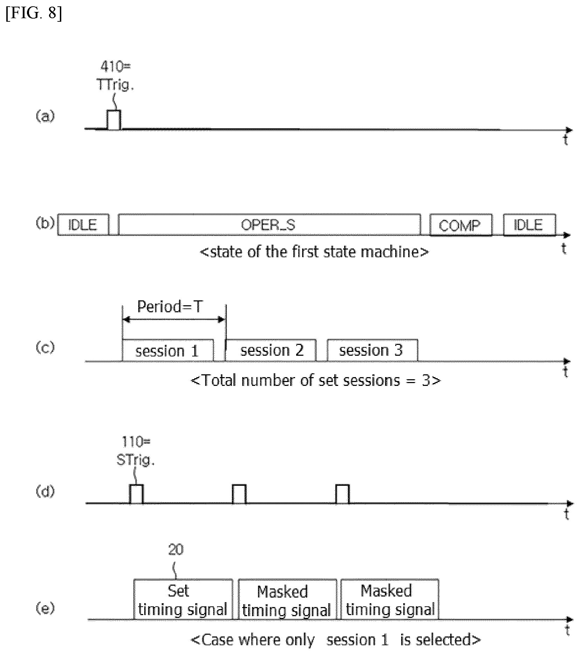

<0136> FIG. 8 illustrates signal patterns and states in one operation mode of the signal generator provided according to an embodiment of the present invention.

<0137> (a) of FIG. 8 illustrates the timer trigger signal (TTrig.) (410) input to the timer (100).

<0138> (b) of FIG. 8 shows the state change of the timer (100).

<0139> (c) of FIG. 8 shows the sessions executed in the timer (100) according to a predetermined session repetition count.

<0140> In this example, the case where the session repetition count set by the control unit (300) is defined as 1 or more is presented. When the timer trigger signal (TTrig.) (410) changes to '1', the timer (100) exits the idle state [IDLE]. Since the session repetition count is defined as 3, which is greater than 0, the timer (100) enters the session operation state [OPER_S]. When a total of 3 sessions are executed, the timer (100) enters the completion state [COMP]. In the completion state [COMP], since the timer trigger signal (TTrig.) (410) is '0', the timer (100) re-enters the idle state [IDLE].

<0141> (d) of FIG. 8 shows the signal generation start signal (STrig.) (110) generated by the timer (100) in each session.

<0142> In the example shown in (d) of FIG. 8, the signal generation start signal (STrig.) (110) has only one pulse, but the number of pulses can be designed to be more, and the interval between pulses can also be designed with various patterns.

<0143> Also, the signal generation start signal (STrig.) (110) output by the timer (100) in different sessions may have the same time pattern, but may also be designed to have different time patterns.

<0144> (e) of FIG. 8 illustrates the timing signal (20) generated by the channel signal generation unit (200). In this case, it shows the case where the selection session (Sel_Session) (360) provided to the session selection unit (230) is limited to only the first session. In this case, in the first session, the channel signal generation unit (200) outputs the signal (221) generated by the generation unit (220) as it is as the timing signal (20). However, in the second session and the third session, the channel signal generation unit (200) does not output the signal (221) generated by the generation unit (220) as it is as the timing signal (20), but outputs a masked signal as the timing signal (20). For example, in the second session and the third session, the timing signal (20) output by the channel signal generation unit (200) may always have the first level (ex: LOW level).

<0145> For example, in the time interval not separately indicated in (e) of FIG. 8, the timing signal (20) may be designed to always have the first level (ex: LOW level). In the interval marked as 'set timing signal' in (e) of FIG. 8, the timing signal (20) may be designed to include one or more pulses. In the interval marked as 'masked timing signal' in (e) of FIG. 8, the timing signal (20) may be designed to always have the first level (ex: LOW level).

<0146> Utilizing the embodiments of the present invention described above, those skilled in the art to which the present invention pertains can easily implement various changes and modifications within a scope that does not depart from the essential characteristics of the present invention. The content of each claim in the claims can be combined with other claims that do not have citation relationships within the scope understandable through this specification.

### Description of Reference Numerals

1: Signal generator
10: External trigger-in signal
20: Timing signal
30: Trigger-out signal
100: Timer
110: Signal generation start signal
200: Channel signal generation unit
210: Memory (RAM)
220: Generation unit
230: Session selection unit
300: Control unit
310: Waveform data
320: Internal trigger
330: Execution period and session repetition count
340: Timing signal selection and operation rule signal
400: Input trigger combination unit
410: Timer trigger signal
500: Output trigger generation unit
641: First state machine
642: Second state machine
700: Delay unit

## Claims

1. A signal generator, comprising:
a timer (100) configured to execute a predetermined session N times upon detecting a pulse of a first trigger signal (410), and to output a signal generation start signal (110) having one or more pulses in each said session;
a channel signal generation unit (200) configured to generate a timing signal (20) having one or more pulses upon detecting a pulse of the signal generation start signal.

2. The signal generator according to Claim 1,
further comprising a control unit (300) providing a predetermined execution period and the value of N to the timer,
wherein the timer is configured to execute the N-repeated sessions according to the execution period upon detecting the pulse of the first trigger signal.

3. The signal generator according to Claim 1,
wherein the channel signal generation unit includes a memory (210) and a generation unit (220),
wherein a sequence of natural numbers is recorded at a sequence of addresses in the memory,
wherein the generation unit is configured to:
generate and output an output signal (221) having either a first level or a second level, read a first natural number and a second natural number from the sequence of natural numbers,
control the level of the output signal to have the first level for a first time duration corresponding to the value of the first natural number, and,
after the first time duration elapses, control the level of the output signal to have the second level for a second time duration corresponding to the value of the second natural number.

4. The signal generator according to Claim 3,
wherein the generation unit is configured to:
read the second natural number after reading the first natural number,
read the first natural number before the start time point of the first time duration corresponding to the value of the first natural number, and
read the second natural number before the start time point of the second time duration corresponding to the value of the second natural number.

5. The signal generator according to Claim 3,
wherein if the first natural number is read from a first address of the memory, the generation unit is configured to read the second natural number from a second address which is the address immediately following the first address.

6. The signal generator according to Claim 1,
wherein the channel signal generation unit includes a memory (210) and a generation unit (220),
wherein a sequence of natural numbers is recorded at a sequence of addresses in the memory,
wherein the generation unit is configured to generate and output an output signal (221) having alternating first and second levels,
wherein the output signal is composed of a plurality of sequential time intervals separated based on boundary time points between the first level and the second level, and
the length of each of the sequential time intervals corresponds respectively to the values of the sequence of natural numbers.

7. The signal generator according to Claim 6,
wherein the generation unit is configured to sequentially read the sequence of natural numbers, and
the length of each of the sequential time intervals corresponds sequentially to the values of the sequentially read sequence of natural numbers.

8. The signal generator according to any one of Claims 3 to 7,
further comprising a control unit (300),
wherein the control unit is configured to prepare the sequence of natural numbers so that the channel signal generation unit can record the sequence of natural numbers in the memory, and to provide them to the channel signal generation unit.

9. The signal generator according to Claim 3 or Claim 6,
wherein the channel signal generation unit further includes a session selection unit (230) configured to receive the output signal and mask a portion of the output signal, and
wherein the session selection unit outputs the output signal as the timing signal provided by the channel signal generation unit during a pre-selected session among the N-repeated sessions, and is configured to output a signal fixed at a specific level as the timing signal during the remaining other sessions excluding the pre-selected session among the N-repeated sessions.

10. The signal generator according to Claim 3 or Claim 6,
wherein the channel signal generation unit further includes a session selection unit (230) configured to receive the output signal and mask a portion of the output signal, wherein the signal generator further includes a control unit (300) configured to provide a current identifier, which is an identifier of the current session among the N-repeated sessions, and one or more selection identifiers, which are identifiers indicating the pre-selected sessions, to the session selection unit,
wherein the session selection unit outputs the output signal as the timing signal provided by the channel signal generation unit if any one of the one or more selection identifiers is identical to the current identifier, and
wherein the session selection unit is configured to output a signal fixed at a specific level as the timing signal if the current identifier is not included in the one or more selection identifiers.

11. The signal generator according to Claim 3 or Claim 6,
wherein the channel signal generation unit further includes a session selection unit (230) configured to receive the output signal and mask a portion of the output signal, and a delay unit (700),
wherein the session selection unit outputs the output signal during a pre-selected session among the N-repeated sessions, and is configured to output a signal fixed at a specific level during the remaining other sessions excluding the pre-selected session among the N-repeated sessions, and
wherein the delay unit is configured to output a delayed signal, which is the signal output by the session selection unit delayed by a predetermined amount of time, as the timing signal provided by the channel signal generation unit.

12. A signal generator, comprising:
a timer (100) configured to execute a predetermined session N times upon detecting a pulse of a first trigger signal (410), and to output a first signal generation start signal having one or more pulses in each said session, and a second signal generation start signal having one or more pulses in each said session;
a first channel signal generation unit (201) configured to generate a first timing signal having one or more pulses upon detecting a pulse of the first signal generation start signal;
and
a second channel signal generation unit (202) configured to generate a second timing signal having one or more pulses upon detecting a pulse of the second signal generation start signal;
wherein the time-axis profile of the first timing signal is different from the time-axis profile of the second timing signal.

13. A quantum computing device, comprising:
the signal generator according to Claim 1; and
any one of a laser device configured to receive the timing signal generated by the signal generator, a qubit operation device configured to receive the timing signal, and a photodetection device configured to receive the timing signal.
